(19) Europäisches Patentamt
European Patent Office
Office européen des brevets

(11) Numéro de publication: 0 000 107
B1

(12) **FASCICULE DE BREVET EUROPEEN**

(21) Numéro de dépôt: 78400001.0

(22) Date de dépôt: 01.06.78

(51) Int. Cl.³: C 25 D 13/08, C 08 G 65/44

# (54) Objet métallique ou métallisé revêtu d'un film d'oxyde de polyphénylène comportant des groupes réactifs, sa préparation par voie électrochimique et son usage

(30) Priorité: 10.06 77 FR 7717851

(43) Date de publication de la demande: 20.12.78 Bulletin 78/01

(45) Mention de la délivrance du brevet: 23.07.80 Bulletin 80/15

(84) Etats contractants désignés: BE CH DE FR GB NL SE

(56) Documents cités:
FR - A - 2 013 259
FR - A - 2 270 338

(73) Titulaire: ANVAR Agence Nationale de Valorisation de la Recherche
13 rue Madeleine Michelis
F - 92522 Neuilly-sur-Seine (FR)

(72) Inventeur: Dubois, Jacques Emile
100 rue de Rennes
F - 75006 Paris (FR)
Pham, Minh-Chau
45 bis route de Montesson
F - 78110 Le Vesinet, Yvelines (FR)
Lacaze, Pierre Camille
Fondation Avicenne 27 boulevard Jourdan
F - 75690 Paris Cédex 14 (FR)

(74) Mandataire: Akerman, Casimir
23 boulevard de Strasbourg
F - 75010 Paris (FR)

EP 0 000 107 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Objet metallique ou metallise revetu d'un film d'oxyde de polyphenylene comportant des groupes reactifs, sa preparation par voie electrochimique et son usage

La présente invention a pour objet des films d'oxydes de polyphénylène comportant des groupes réactifs et leur préparation par voie électrochimique.

L'invention concerne plus particulièrement de nouveaux polymères comportant des groupes chimiques réactifs et qui sont préparés par voie électrolytique et déposés sous forme de films sur des surface métalliques.

La polymérisation par oxydation électrolytique du phénol et de certains de ses dérivés ainsi que le dépôt sur des surfaces métalliques des films polymères obtenus sont connus d'après le brevet des Etats-Unis d'Amérique N° 2.961.384. Par ailleurs, l'obtention de films polymères à partir de phénols disubstitués en positions 2 et 6 et leur dépôt électrolytique sur des métaux tels que le fer, le cuivre et le nickel sont décrits dans le brevet francais N° 74.16158. Ces couches polymères sont très adhérentes, hydrophobes et uniformes et trouvent leur application dans la protection des métaux.

Bien entendu, les divers polymères ainsi obtenus ne comportent pas de groupes réactifs. Certains auteurs ont cependant réussi à introduire des groupes chimiques réactifs dans des films polymères par des méthodes physiques élaborées. Dans un tel cas, des groupes carbonyles ont été introduits sur le surface du polymère (polypropylène) par action de l'oxygène après une irradiation de la surface par UV ou électrons (K. KATO, J. of Applied Polymer Science, *19* (1975), p. 951—957). On a également pu introduire des groupes $NH_2$ par le procédé de la décharge électrique. (J. R. Hollahan et Coll. J. Appl. Polym. Science, *13*, (1969), p. 807). Les rares groupes réactifs ainsi introduits dans les films sont distribués au hasard et par ailleurs les films ont tendance à vieillir en raison du grand nombre d'espèces radicalaires piégées (M. MILLARD, Synthesis of Organic Polymer Films in Plasmas, Chap. V. p. 177, dans technics and Application of Plasma Chemistry. J. H. HOLLAHAN et A. T. BELL, 1974, J. WILEY).

Le but de la présente invention est de réaliser, par le procédé de polymérisation électrolytique mentionné ci-dessus, la synthèse de polymères réactifs qui se caractérise par la présence, dans chaque maillon de leur chaîne, de groupes fonctionnels capables de réagir selon une réaction chimique spécifique.

Les films polymères de l'invention sont obtenus à partir de phénols répondant à la formule

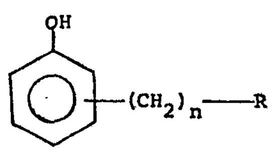

(I)

dans laquelle

R représente un groupe acyle de 1 à 7 atoms de carbone, un groupe hydroxy, carboxy, alcoxycarbonyle, amino, alkylamino ou phénylamino, et

n est un nombre entier, qui peut être nul dans le cas où R rest un groupe acyle.

L'invention concerne plus particulièrement les films polymères obtenus à partir de monomères de formule (I) dans laquelle $—(CH_2)_n—R$ représente un groupe formyle, acétyle, propionyle, benzoyle, oxo-3 butyle, hydroxyméthyle, carboxyméthyle aminoéthyle ou anilinométhyle.

Les polymères de l'invention comportent donc comme groupe fonctionnel réactif un groupe carbonyle, hydroxy, carboxy ou amino par motif.

Selon l'invention les films polymères sont préparés par oxydation anodique des phénols monomères (I) dans un bain électrolytique alcoolique et fortement basique. Les polymères formés se déposent directement sur l'anode, le cas échéant un substrat conducteur — ou rendu conducteur — que l'on désire revêtir d'une mince couche de polymère.

Les alcools utilisables pour le bain sont des alcools inférieurs, tels que le méthanol, éthanol, propanol ou isopropanol, ou un mélange d'alcool inférieur et de polyol tel que le glycol ou le glycérol.

Les bases fortes peuvent être par exemple l'hydroxyde de sodium ou de potassium, ou bien l'amidure de sodium. Leur concentration peut être de 0,05 à 1 M, de préférence 0,1 à 0,3 M pour assurer le bon déroulement de l'électrolyse.

Le phénol monomère est utilisé à des concentrations d'au moins 6 g/l d'électrolyte, de préférence de 12 à 25 g/l.

Par ailleurs il est recommandé de prévoir environ 3 g de monomère par $dm^2$ de substrat à revêtir.

L'anode ou le substrat conducteur devant être recouvert par le polymère de l'invention peut être constitué par la plupart des métaux courants tels que le fer, l'argent, le nickel, le chrome, le cuivre, l'or, le platine, etc., ou leurs alliages.

L'électrolyse est effectuée dans une cuve (par exemple en acier) de manière habituelle à température ambiante avec une tension de sortie initiale du générateur de l'ordre de 10 Volt et ne densité de courant initiale de 0,1 à 1 $A/dm^2$. Le film polymère se forme rapidement sur la surface de

l'anode (ou du substrat) et un recouvrement total, obtenu en général entre 5 à 30 minutes, peut être décelé lorsque le courant devient très faible.

Après l'électrolyse, le substrat revêtu du film polymère est lavé à l'eau puis à l'alcool afin d'éliminer les traces résiduelles de base, de phénol monomère et des produits secondaires éventuels.

Les films polymères obtenus selon l'invention sont homogènes, continus, uniformes, de faible épaisseur (300 à 3500 Å selon le polymère) insolubles dans l'eau et les alcools, très adhérents et hydrophiles selon le groupe réactif qu'ils comportent.

Les exemples suivants illustrent l'invention.

Exemple 1

*Polymère de l'alcool métahydroxybenzylique ou poly(oxyde de hydroxyméthyl-2 phénylène-1,4)*

On effecture l'électrolyse d'une solution de 0,62 g (0,1 M) d'alcool métahydroxybenzylique et 0,6 g d'hydroxyde de sodium (0,3 M) dans 50 $cm^3$ d'alcool méthylique en utilisant comme anode du cuivre massif avant une surface de 12 $cm^2$. On applique une différence de potentiel $\Delta V = 0{,}94$ volt par rapport à une électrode de calomel saturé (ECS). La densité de courant est initialement $i_I = 2$ mA/$cm^2$ et tombe à $i_f = 0{,}5$ mA/$cm^2$ au bout de $t = 40$ minutes.

On obtient un film ayant une épaisseur de 2500 Å mesuré avec un appareil interférentiel Tolansky monté sur un microscope métalloplan Leitz.

Exemple 2

*Polymère de l'acide o-hydroxyphénylacétique ou poly(oxyde de carboxyméthyl-2 phénylène-1,4)*

De la même manière que dans l'exemple 1, on effectue l'électrolyse d'une solution de 0,76 g (0,1 M) d'acide salicylique et 0,6 g de NaOH dans 50 $cm^3$ d'alcool méthylique, en utilisant comme anode un miroir de fer (fer évaporé sur une plaque de verre) et en appliquant une tension de $\Delta V = 0{,}85$ V/ECS

$i_I = 3$ mA/$cm^2$ $\quad i_f = 0{,}1$ mA/$cm^2$ $\quad t = 25$ mn

On obtient un film polymère ayant 1200 Å d'épaisseur.

Exemple 3

*Polymère de la p-hydroxyphényl-2 éthylamine ou poly(oxyde d'aminoéthyl-4 phénylène-1,2)*

a) De la même manière que dans l'exemple 1, on effectue l'électrolyse d'une solution méthanolique (50 $cm^3$) de 0,68 g de parahydroxyphényl-2 éthylamine (Tyramine) et de 0,6 g de NaOH en utilisant une anode en cuivre massif de 18 $cm^2$. $\Delta V = 0{,}5$ V/ECS.

$i_I = 1{,}55$ mA/$cm^2$ $\quad i_f = 0{,}06$ mA/$cm^2$ $\quad t = 40$ mn

Le film obtenu a 2500 Å d'épaisseur.

b) On a répété l'expérience ci-dessus en remplaçant l'anode cuivre par un miroir de fer de 8,8 $cm^2$. $\Delta V = 0{,}9$ V/ECS.

$i_I = 3{,}8$ mA/$cm^2$ $\quad i_f = 0{,}1$ mA/$cm^2$ $\quad t = 30$ nm

Exemple 4

*Polymère de N-o-hydroxybenzyl-aniline ou poly(oxyde d'anilino-méthyl-2 phénylène-1,4)*

a) On a effectué l'électrolyse de la même manière que dans les exemples précédents mais en faisant varier la différence de potentiel $\Delta V$ de 0 à 1,3 V/ECS et en utilisant un miroir de fer de 9 $cm^2$.

$i_{max} \simeq 10$ mA $\quad i_f = 0{,}8$ mA $\quad t = 8$ mn (temps de balayage)

Epaisseur du film: 3000 Å

b) On a répété l'expérience avec du fer massif (7 $cm^2$) et tension constante.

$\Delta V = 0{,}7$ V. $\quad i_I = 2{,}2$ mA/$cm^2$ $\quad i_f = 0{,}03$ mA/$cm^2$2 $\quad t = 4$ mn

Exemple 5

*Polymère de p-hydroxyphényl-4 butanone-2*

a) De la même manière que dans les exemples 1 à 3, on effectue l'électrolyse de 0,82 g (0,1 M) de p-hydroxyphényl-4 butanone-2 en utilisant une anode de fer massif de 5 $cm^2$.

$i_I = 36$ mA/$cm^2$ $\quad i_f = 7$ mA/$cm^2$ $\quad t = 5$ mn

épaisseur du film: 3 500 Å.

b) On utilise une anode d'acier de 10 $cm^2$.

$$i_i = 40 \text{ mA/cm}^2 \qquad i_f = 22 \text{ mA/cm}^2 \qquad t = 1 \text{ mn}$$

c) On utilise une anode en titane massif de 16 $cm^2$.

$$i_i = 21 \text{ mA/cm}^2 \qquad i_f = 0{,}18 \text{ mA/cm}^2 \qquad t = 5 \text{ mn}$$

Dans le tableau I suivant sont rassemblés, en plus des exemples précédents, divers phénols substitués qui ont été polymérisés selon l'invention. Toutes les polymérisations ont été suivies in situ par polaromicrotribométrie (PMT) qui permet de détecter les modifications physicochimiques sur la surface métallique (voir par exemple J. E. DUBOIS, P. C. LACAZE, R. COURTEL, C. C. HERMANN, D. MAUGIS, J. of Electrochem. Soc., *122,* (1975) p 1454).

TABLEAU I

| Composé N° | Monomère | Epaisseur (Å) | Potentiel d'oxydation $E_{ox}$ / ECS (V) | | | |
|---|---|---|---|---|---|---|
| | | | Fe | Cu | Pt | Ni |
| 1 | 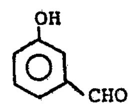 | 400 | 0,57 | 0,29 | 0,35 | 0,41 |
| 2 | 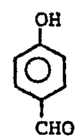 | 300 | 0,47 | 0,33 | 0,34 | 0,41 |
| 3 | 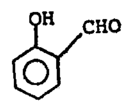 | 300 | 0,53 | 0,37 | 0,41 | 0,45 |
| 4 | 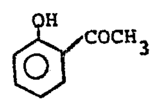 | 400 | 0,49 | 0,34 | 0,35 | 0,39 |
| 5 | 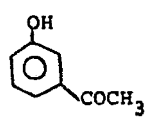 | 300 | 0,47 | 0,32 | 0,32 | 0,34 |

TABLEAU (Suite)

| Composé N° | Monomère | Epaisseur (Å) | Potentiel d'oxydation $E_{ox}$ / ECS (V) | | | |
|---|---|---|---|---|---|---|
| | | | Fe | Cu | Pt | Ni |
| 6 | 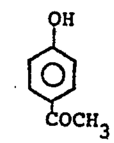 | 300 | 0,47 | 0,33 | – | 0,41 |
| 7 | 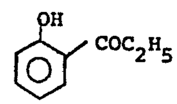 | 700 | 0,57 | 0,36 | 0,54 | 0,36 |
| 8 | 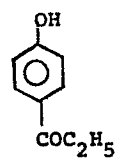 | 300 | 0,5 | 0,3 | 0,43 | 0,4 |
| 9 | 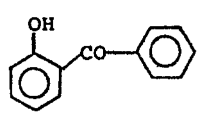 | 300 | 0,45 | 0,36 | 0,39 | – |
| 10 | 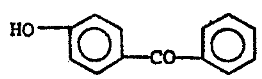 | 300 | 0,45 | 0,28 | – | 0,34 |

TABLEAU I (Suite)

| Composé N° | Monomère | Epaisseur (Å) | Potentiel d'oxydation $E_{ox}$ / ECS (V) | | | |
|---|---|---|---|---|---|---|
| | | | Fe | Cu | Pt | Ni |
| 11 | 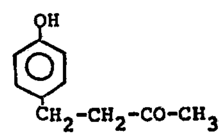 | 3500 | 0,46 | 0,23 | 0,18 | 0,22 |
| 12 | 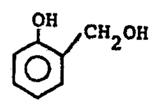 | 2500 | 0,42 | 0,22 | 0,20 | 0,22 |
| 13 | 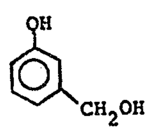 | 2500 | 0,51 | 0,51 | 0,25 | 0,28 |
| 14 | 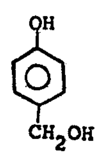 | 2500 | 0,46 | 0,24 | 0,16 | 0,31 |

TABLEAU (Suite Et Fin)

| Composé N° | Monomère | Epaisser (Å) | Potentiel d'oxydation $E_{ox}$ / ECS (V) | | | |
|---|---|---|---|---|---|---|
| | | | Fe | Cu | Pt | Ni |
| 15 | 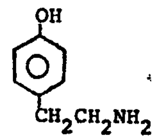 | 2500 | 0,32 | – | 0,18 | 0,37 |
| 16 | 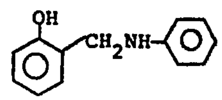 | 3000 | 0,46 | – | 0,13 | – |
| 17 | 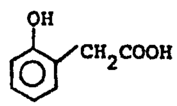 | 1200 | 0,49 | 0,18 | 0,12 | – |
| 18 | 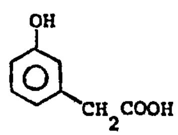 | 1500 | 0,52 | 0,27 | 0,18 | 0,55 |
| 19 | 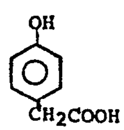 | 1150 | 0,49 | 0,27 | 0,15 | 0,56 |

Les films polymères ont été traités par des agents chimiques caractéristiques pour la vérification de la présence et de la réactivité des groupes chimiques fonctionnels. Les polymères comportant le groupe carbonyle ont été traités par une solution éthanolique de 1 % de dinitro-2,4 phényl-hydrazine (2,4 DNPH) et de 2 % HCl concentré; les électrodes étaient trempées pendant 5 minutes dans cette solution à l'ébullition puis lavées dans de l'éthanol par agitation ultrasonique. Les polymères comportant le groupe hydroxy ou amino ont été traités par du chlorure d'acétyle.

Les films polymères de l'invention ainsi que les films traités par les agents chimiques ont été identifiés par spectroscopie IR à réflexions multiples et/ou par ESCA (Electron Spectroscopy for Chemical Analysis).

Dans le tableau II suivant sont indiqués les pics caractéristiques des groupes chimiques pour des polymères dont les spectres IR sont bien résolus, tandis que des résultats obtenus en ESCA seront donnés dans le tableau III pour les autres.

Dans tous les spectres IR obtenus, la bande correspondant au groupe OH phénolique est complètement absente; par contre le pic caractérisant le groupe polyoxyde apparaît aux environs de 1200 $cm^{-1}$. La présence de très intenses bandes d'absorption C=O, correspondant soit à la fonction aldéhyde (1700 $cm^{-1}$) soit cétone (1680 $cm^{-1}$) prouve que ces groupes restent inattaqués durant l'électrolyse.

TABLEAU II (I.R.)

| Polymères de : | Avant traitement | | Après traitement avec 2,4-DNPH | |
|---|---|---|---|---|
| | C = O (cm$^{-1}$) | C – O – C (cm$^{-1}$) | $r = \frac{I\ (C=O)\ final}{I\ (C=O)\ initial}$ | C = N (cm$^{-1}$) |
| m-hydroxybenzaldéhyde | 1700 | 1240, 1150, 1050 | 0,38 | 1610 |
| p-hydroxybenzaldéhyde | 1680 | 1210, 1150 | | |
| o-hydroxypropiophénone | 1680 | 1270, 1155, 1120, 1070 | 0,88 | 1610 |
| (p-hydroxyphényl)-4-butanone-2 | 1700 | 1210, 1160 | 0,69 | 1615 |
| o-hydroxyacétophénone | 1680 | 1280, 1210, 1070<br>(w) (i) | | |
| m-hydroxyacétophénone | 1670 | 1265, 1190<br>(i) (w) | | |
| p-hydroxyacétophénone | 1670 | 1260, 1210, 1065, 1015<br>(w) (w) | | |
| o-hydroxybenzophénone | 1660 | 1280 1230 1140, 1015<br>(w) (i) | | |

r = rapport des intensités d'absorption de C = O après et avant traitement avec 2,4-DNPH

w = faible

i = intense

TABLEAU II (I.R.) (Suite)

| Polymères de : | Avant traitement | | Après traitement avec $CH_3COCl$ | |
|---|---|---|---|---|
| | C = O (cm$^{-1}$) | C – O – C (cm$^{-1}$) | C – O – C | – COO – |
| alcool o-hydroxybenzylique | | 1220 | 1220 | 1735 |
| alcool-m-hydroxybenzylique | | 1230 | 1230 | 1735 |
| alcool p-hydroxybenzylique | | 1210 | 1210 | 1736 |
| acide o-hydroxyphénylacétique | 1730 | 1220 | | |
| acide m-hydroxyphénylacétique | 1740 | 1230 | | |
| acide p-hydroxyphénylacétique | 1725 | 1200 | | |

L'analyse ESCA des anodes confirme aussi la présence des polymères sur leur surface. Les spectres $C_{1s}$ mettent en évidence les groupes chimiques distincts par les valeurs des énergies de liaison caractéristiques. On obtient les mêmes résultats pour les dérivés ortho, méta ou para.

TABLEAU III (ESCA)

| Polymère de | Spectre du carbone | | Spectre de N ou O | |
|---|---|---|---|---|
| | liaison | énergie (eV) | liaison | énergie (eV) |
| Aldéhydes et cétones ($N^c$ 1 à 11) | C – C<br>C – O – C<br>C = 9 | 285<br>286<br>288 | | |
| Alcools hydroxyphényl-benzyliques | C – C<br>C – O – C<br>–COO–R (après traitement $CH_3COCl$) | 285<br>286<br>289,2 | | |
| p-hydroxyphényl-ethylamine | C – C<br>C – O – C | 285<br>286,6 | N – N | 399,7 |
| N-(o-hydroxy-benzyl)-aniline | C – C<br>C – O – C | 285<br>286,2 | N – H | 399,3 |
| Acides hydroxyphényl-acétiques | C – C<br>C – O – C<br>$-COO^{\ominus}$ | 285<br>286,4<br>288,6 | C – O – C<br>$-COO^{\ominus}$ | 533,1<br>532 |

Compte tenu de la présence d'un groupe chimique réactif sur toute la surface les films polymères de l'invention peuvent être utilisés pour le greffage de diverses matières réagissant sur ces fonctions.

Ainsi il est possible de fixer des enzymes ou bien de faire réagir d'autres composés comportant des groupes réactifs, par exemple des chlorures ou anhydrides d'acides sur les films polymères portant un groupe hydroxy ou amine (ce qui permet d'obtenir une surface de poly-ester et respectivement polyamide). Cette propriété permet l'utilisation des films polymères de l'invention comme couches intermédiaires pour la fixation des résines, laques et peintures, notamment sur les métaux auxquels celles-ci adhèrent très mal.

**Revendications**

1. Objet métallique ou métallisé revêtu d'un film d'oxyde de polyphénylène, caractérisé par le fait que ledit film est constitué d'unités d'oxyphénylène substitué de formule I':

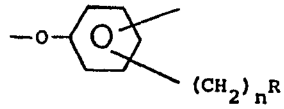

(I')

dans laquelle:

R représente un groupe acyle de 1 à 7 atomes de carbone, un groupe hydroxy, carboxy, alcoxycarbonyle, amino, alkylamino ou phénylamino, et

n est un nombre entier qui peut être nul dans le cas ou R est un groupe acyle.

2. Objet selon la revendication 1, caractérisé par le fait que, dans les unités d'oxyphénylène répondant à la formule I', le groupement $-(CH_2)_n-R$ représente un groupe formyle, acétyle, propionyle, benzoyle, oxo-3 butyle, hydroxyméthyle, carboxyméthyle, aminoéthyle ou anilinométhyle.

3. Objet métallique ou métallisé, revêtu d'un film d'oxyde de polyphénylène constitué d'unités de formule:

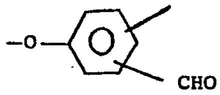

4. Objet métallique ou métallisé revêtu d'un film d'oxyde de polyphénylène constitué d'unités de formule:

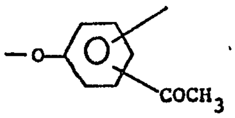

5. Objet métallique ou métallisé revêtu d'un film d'oxyde de polyphénylène constitué d'unités de formule:

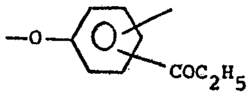

6. Objet métallique ou métallisé revêtu d'un film d'oxyde de polyphénylène constitué d'unités de formule:

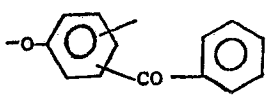

7. Objet métallique ou métallisé revêtu d'un film d'oxyde de polyphénylène constitué d'unités de formule:

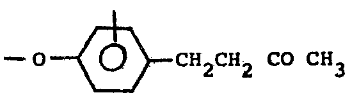

8. Objet métallique ou métallisé revêtu d'un film d'oxyde de polyphénylène constitué d'unités de formule:

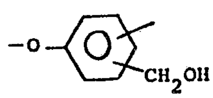

9. Objet métallique ou métallisé revêtu d'un film d'oxyde de polyphénylène constitué d'unités de formule:

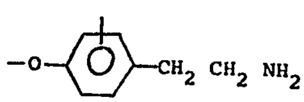

10. Objet métallique ou métallisé revêtu d'un film d'oxyde de polyphénylène constitué d'unités de formule:

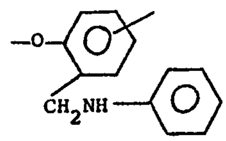

11. Objet métallique ou métallisé revêtu d'un film d'oxyde de polyphénylène constitué d'unités de formule:

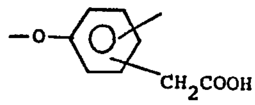

12. Procédé de préparation par voie électrolytique d'un objet métallique ou métallisé revêtu d'un film d'oxyde de polyphénylène tel que défini dans la revendication 1, procédé caractérise en ce que l'on effectue, dans un bain électrolytique alcoolique et fortement basique, une oxydation anodique de phénols de formule I

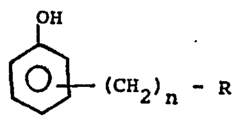

(I)

dans laquelle les symboles R et n ont la même signification que dans la revendication 1, l'objet métallique ou métallisé servant d'anode.

13. Application des objets métalliques ou métallisés revêtus d'un film d'oxyde de polyphénylène selon l'une quelconque des revendications 1 à 11 à la fixation d'enzymes.

14. Application des objets métalliques ou métallisés revêtus d'un film d'oxyde de polyphénylène selon l'une quelconque des revendications 1 à 11 au greffage de résines.

15. Application des objets métalliques ou métallisés revêtus d'un film d'oxyde de polyphénylène selon l'une quelconque des revendications 1 à 11 à la fixation de laques ou de peintures.

**Patentansprüche**

1. Metallische oder metallisierte Gegenstände, die mit einem Polyphenylenoxidfilm beschichtet sind, dadurch gekennzeichnet, daß der Film aus substituierten Phenylenoxideinheiten der Formel 1'

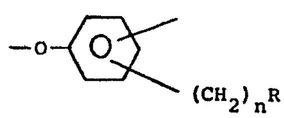

(I')

aufgebaut ist, in der

R eine Acylgruppe mit 1 bis 7 Kohlenstoffatomen, eine Hydroxylgruppe, eine Carboxylgruppe, eine Alkoxycarbonylgruppe, eine Aminogruppe, eine Alkylaminogruppe oder eine Phenylaminogruppe und

n eine ganze Zahl, die dann, wenn R für eine Acylgruppe steht, den Wert Nullbestizen kann, bedeuten.

2. Gegenstand nach Anspruch 1, dadurch gekennzeichnet, daß in den Phenylenoxideinheiten der Formel I' die Gruppe der Formel $—(CH_2)_n—R$ für eine Formylgruppe, eine Acetylgruppe, eine Propionylgruppe, eine Benzoylgruppe, eine 3-Oxo-butylgruppe, eine Hydroxymethylgruppe, eine Carboxymethylgruppe, eine Aminoäthylgruppe oder eine Anilinomethylgruppe steht.

3. Metallischer oder metallisierter Gegenstand, dadurch gekennzeichnet, daß er mit einem Polyphenylenoxidfilm beschichtet ist, der aus Einheiten der nachstehenden Formel

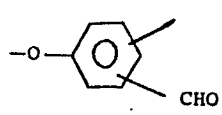

aufgebaut ist.

4. Metallischer oder metallisierter Gegenstand, dadurch gekennzeichnet, daß er mit einem Polyphenylenoxidfilm beschichtet ist, der aus Einheiten der Formel

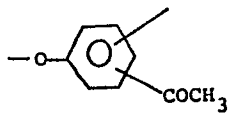

aufgebaut ist.

5. Metallischer oder metallisierter Gegenstand, dadurch gekennzeichnet, daß er mit einem Polyphenylenoxidfilm beschichtet ist, der aus Einheiten der Formel

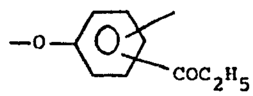

aufgebaut ist.

6. Metallischer oder metallisierter Gegenstand, dadurch gekennzeichnet, daß er mit einem Polyphenylenoxidfilm beschichtet ist, der aus Einheiten der Formel

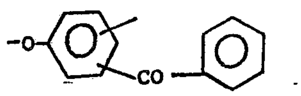

aufgebaut ist.

7. Metallischer oder metallisierter Gegenstand, dadurch gekennzeichnet, daß er mit einem Polyphenylenoxidfilm beschichtet ist, der aus Einheiten der Formel

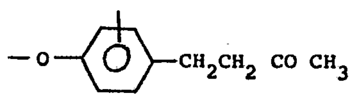

aufgebaut ist.

8. Metallischer oder metallisierter Gegenstand, dadurch gekennzeichnet, daß er mit einem Polyphenylenoxidfilm beschichtet ist, der aus Einheiten der Formel

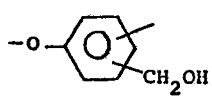

aufgebaut ist.

9. Metallischer oder metallisierter Gegenstand, dadurch gekennzeichnet, daß er mit einem Polyphenylenoxidfilm beschichtet ist, der aus Einheiten der Formel

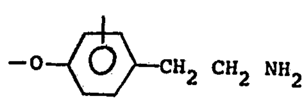

aufgebaut ist.

10. Metallischer oder metallisierter Gegenstand, dadurch gekennzeichnet, daß er mit einem Polyphenylenoxidfilm beschichtet ist, der aus Einheiten der Formel

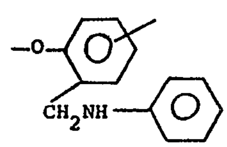

aufgebaut ist.

11. Metallischer oder metallisierter Gegenstand, dadurch gekennzeichnet, daß er mit einem Polyphenylenoxidfilm beschichtet ist, der aus Einheiten der Formel

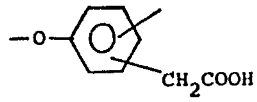

aufgebaut ist.

12. Verfahren zur Herstellung eines metallischen oder metallisierten Gegenstandes, der mit einem Polyphenylenoxidfilm nach Anspruch 1 beschichtet ist, auf elektrolytischem Wege, dadurch, gekennzeichnet, daß man eine anodische Oxidation von Phenolen der Formel I

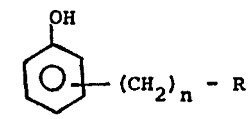

(I)

in der die Symbole R und n die in Anspruch 1 angegebenen Bedeutungen besitzen, in einem alkoholischen und stark basischen Elektrolysebad bewirkt und dabei den metallischen oder metallisierten Gegenstand als Anode verwendet.

13. Verwendung der mit einem Polyphenylenoxidfilm beschichteten metallischen oder metallisierten Gegenstände gemäß einem der Ansprüche 1 bis 11 zur Bindung von Enzymen.

14. Verwendung der mit einem Polyphenylenoxidfilm beschichteten metallischen oder metallisierten Gegenstände gemäß einem der Ansprüche 1 bis 11 zum Aufpfropfen von Harzen.

15. Verwendung der mit einem Polyphenylenoxidfilm beschichteten metallischen oder metallisierten Gegenstände gemäß einem der Ansprüche 1 bis 11 zur Bindung von Lacken oder Anstrichen.

**Claims**

1. Metallic or metallised object coated with a film of polyphenylene oxide, characterised by the fact that the said film consists of substituted oxyphenylene units of the formula I':

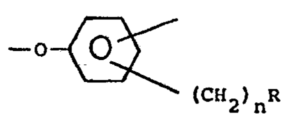

(I')

in which:

R denotes an acyl group containing 1 to 7 carbon atoms, a hydroxy, carboxy, alkoxy carbonyl, amino, alkylamino or phenylamino group, and

n is an integer which may be zero in the case where R is an acyl group.

2. An object according to claim 1, characterised by the fact that in the oxyphenylene units of the formula I', the $-(CH_2)_n-R$ group denotes a formyl, acetyl, propionyl, benzoyl, 3-oxobutyl, hydroxymethyl, carboxymethyl, aminoethyl or aniline methyl group.

3. A metallic or metallised object coated with a film of polyphenylene oxide consisting of units of the formula:

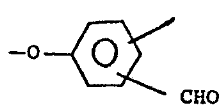

4. A metallic or metallised object coated with a film of polyphenylene oxide consisting of units of the formula:

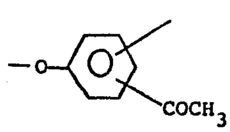

5. A metallic or metallised object coated with a film of polyphenylene oxide consisting of units of the formula:

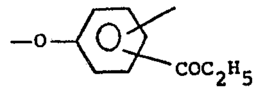

6. A metallic or metallised object coated with a film of polyphenylene oxide consisting of units of the formula:

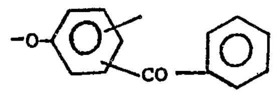

7. A metallic or metallised object coated with a film of polyphenylene oxide consisting of units of the formula:

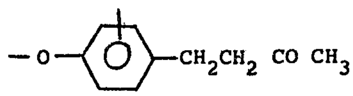

8. A metallic or metallised object coated with a film of polyphenylene oxide consisting of units of the formula:

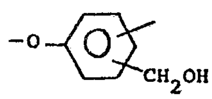

9. A metallic or metallised object coated with a film of polyphenylene oxide consisting of units of the formula:

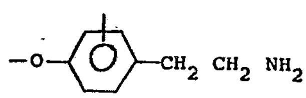

10. A metallic or metallised object coated with a film of polyphenylene oxide consisting of units of the formula:

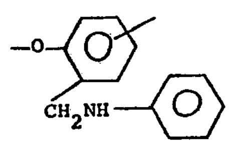

11. A metallic or metallised object coated with a film of polyphenylene oxide consisting of units of the formula:

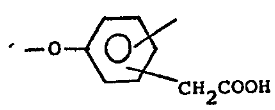

12. A process for preparing electrolytically a metallic or metallised object coated with a film of polyphenylene oxide such as defined in claim 1, said process characterised in that an anodic oxidation of phenols of formula I

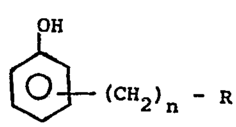

(I)

in which the symbols R and n have the same meaning as in claim 1, is carried out in an alcoholic and strongly basic electrolysis bath, the metallic or metallised object serving as the anode.

13. Application of metallic or metallised objects coated with a film of polyphenylene oxide according to any of claims 1 to 11 in the fixing of enzymes.

14. Application of metallic or metallised objects coated with a film of polyphenylene oxide according to any of claims 1 to 11 in the grafting of resins.

15. Application of metallic or metallised objects coated with a film of polyphenylene oxide according to any of claims 1 to 11 in the fixing of lacquers or paints.